# EUROPÄISCHE PATENTSCHRIFT

(11) **EP 2 306 160 B1**
(45) Veröffentlichungstag und Bekanntmachung des Hinweises auf die Patenterteilung: **09.08.2017**
(21) Anmeldenummer: 10010767.1
(22) Anmeldetag: 27.09.2010
(51) Int. Cl.: G01F 1/66, G01F 15/14

(54) **Messeinsatz sowie Durchflusszähler**
Measuring insert and flow meter
Organe de mesure et compteur de débit

(30) Priorität: 02.10.2009 DE 102009048011
(43) Veröffentlichungstag der Anmeldung: 06.04.2011
(73) Patentinhaber: Diehl Metering GmbH, 91522 Ansbach (DE)
(72) Erfinder: Kroemer, Harald, Dipl-Ing., 91522 Ansbach (DE); Öfelein, Wilhelm, 91522 Ansbach (DE)
(74) Vertreter: Stippl, Hubert

(56) Entgegenhaltungen:
- EP-A1- 0 890 826
- DE-A1-102004 060 063
- US-B1- 6 508 134

## Beschreibung

Die vorliegende Erfindung betrifft einen Messeinsatz für einen Durchflusszähler sowie einen Durchflusszähler.

Zur Erfassung des Durchflusses von flüssigen oder gasförmigen Medien in Leitungsnetzwerken werden üblicherweise Durchflusszähler eingesetzt. Die Messung des Durchflusses mittels des jeweiligen Durchflusszählers basiert auf unterschiedlichen Messprinzipien. Beispielsweise wird der Durchfluss mit sogenannten mechanischen Durchflussmessern erfasst, indem die Drehbewegung eines vom Medium beaufschlagten Flügelrades abgetastet und einer Auswertung zugeführt wird. Darüber hinaus gibt es auch sogenannte statische Durchflusszähler, die auf dem Prinzip einer Ultraschallmessung, zumeist nach dem Laufzeitdifferenz-Prinzip, beruhen.

Gerade bei Großwasserzählem oder sogenannten Volumenmessteilen für große Nenndurchflussmengen, beispielsweise von 15 m³/h bis 1.500 m³/h wird der Durchfluss bis heute überwiegend mittels mechanischer Durchflussmesser oder auch "Woltman-Zähler" genannt, gemessen. Typische Rohrduxchmesser liegen hierbei in Nennweitenbereichen von DN 50 bis DN 500. Derartige Großwasserzähler sind in einer großen Anzahl über lange Zeiträume im Einsatz. Allerdings unterliegen die mechanischen Bestandteile der Großwasserzähler einer ständigen mechanischen Beeinträchtigung, beispielsweise durch feste Bestandteile wie etwa Sandkörner oder dergleichen, was zu erhöhtem Serviceaufwand führt. Als Folge davon müssen Großwasserzähler entweder mit einem erhöhten Serviceaufwand betrieben oder durch neue Geräte ersetzt werden. Darüber hinaus haben derartige Großwasserzähler bzw. Volumenmessteile den Nachteil einer vergleichsweise großen Ungenauigkeit sowie eines begrenzten Messbereichs sowie einer limitierten Lebensdauer.

### Aufgabe

Die Aufgabe der vorliegenden Erfindung besteht darin, die vorgenannten Nachteile zu beseitigen.

### Lösung

Die Aufgabe der vorliegenden Erfindung wird durch einen Messeinsatz gemäß Anspruch 1 gelöst. Der vorbeschriebene Messeinsatz ermöglicht es, Großwasserzähler bzw. Volumenmessteile, die ursprünglich für einen mechanischen Betrieb konzipiert worden waren und sich seit langem im Einsatz befinden, in einfacher Weise nachzurüsten, wodurch zum einen nur sehr geringe Kosten im Vergleich zu einem Gesamtaustausch anfallen und zum anderen der bereits bestehende Großwasserzähler in Zukunft mit erheblich geringerem Wartungsaufwand und guter Langzeitstabilität betrieben werden kann. Darüber hinaus wird die Messgenauigkeit sowie der Messbereich erhöht bzw. vergrößert. Zudem besteht die Möglichkeit der Datenauslesung über geeignete Schnittstellen (z.B. Funk, M-Bus, L-Bus, LAN usw.). Hierdurch werden die Ablesekosten deutlich reduziert. Bei der verwendeten statischen Messstrecke handelt es sich um eine Ultraschall-Messstrecke. Die Ultraschall-Messtechnik hat den Vorteil, dass sie im Vergleich zu mechanischen Zählern eine wesentlich geringere Anfälligkeit für Schädigungen begründet und daher weitaus wartungsgünstiger ist als mechanische Messeinrichtungen.

Besonders vorteilhaft ist, dass die Ultraschall-Messstrecke U-förmig ist. Deshalb können die Ultraschallwandler an einer Seite angeordnet sein, wodurch die Anschlussgeometrie und damit der konstruktive Aufbau des Messeinsatzes vereinfacht und die Geometrie des Gehäuses des Großwasserzählers ausgenutzt werden kann.

Zweckmäßigerweise weist der Messeinsatz einen Gehäusedeckel auf, der dazu vorgesehen ist, den Messeinsatz an der Öffnung des Gehäuses des Großwasserzählers zu befestigen.

Vor allem dient der Gehäusedeckel zweckmäßigerweise auch als Montageplatte oder Montageplattform für weitere Bauteile, beispielsweise für den oder die Ultraschallwandler. Hierdurch kann in einfacher Weise eine Ultraschallwandler-Anordnung zur Gewährleistung einer umgelenkten, insbesondere U-förmig umgelenkten, Ultraschall-Messstrecke geschaffen werden.

Gemäß einer vorteilhaften Ausgestaltung der vorliegenden Erfindung umfasst der Messeinsatz, vorzugsweise als eigenständiges Teil, ein Einsatzteil, welches einen Strömungsdurchgang für das Medium bildet. Gleichzeitig beherbergt das Einsatzteil die Messstrecke vollständig oder zumindest einen Teil derselben. Das Einsatzteil bietet somit den Vorteil, bei gegebenen Volumenverhältnissen aufgrund des Gehäuses des Großwasserzählers einen für die Messung definierten Durchflussquerschnitt, in dem die statische Messung erfolgt, vorzusehen.

Zur Befestigung des Einsatzteils umfasst dieses zweckmäßigerweise eine Befestigungsplatte, die es ermöglicht, das Einsatzteil mit der Abschlussplatte zu einer handhabbaren Einheit zu verbinden. Zweckmäßigerweise ist die Befestigungsplatte standardisiert, d.h. sie besitzt bei unterschiedlichen Nenngrößen von Einsatzteil zu Einsatzteil gleiche Form.

Dementsprechend ermöglicht es die Erfindung, mindestens zwei, vorzugsweise eine Mehrzahl an Einsatzteilen mit unterschiedlichen Strömungsdurchgängen von jeweils unterschiedlicher Querschnittsfläche für eine wahlweise Benutzung bereitzuhalten. Hierdurch können verschiedene Nenngrößen abgedeckt werden.

Das Einsatzteil ist zweckmäßigerweise zum Gehäuse der Anschlussarmatur bzw. des Durchflusszählers abgedichtet. Hierdurch ist sichergestellt, dass das Medium ausschließlich durch den Bereich des Einsatzteils, welches die Messstrecke umfasst, fließt.

Alternativ kann das Einsatzteil aber auch so konzipiert sein, dass nur ein Teil der Strömung für die Messung herangezogen wird.

Die Umlenkung der Messstrecke erfolgt mittels Umlenkspiegeln, die von Umlenkspiegelhaltem getragen sind.

In vorteilhafter Weise kann, bedingt durch die Konstruktion, der jeweilige Umlenkspiegelhalter in das Einsatzteil eingeformt sein. Hierdurch kann die Teilevielzahl reduziert werden.

Dadurch, dass das Einsatzteil aus zwei miteinander in Verbindung stehenden Formteilen aufgebaut ist und die gemeinsame Verbindungsebene die Oberfläche der Umlenkspiegel im montierten Zustand schneidet, kann zum einen das Einsatzteil einfacher als Formteil geformt werden, zum anderen kann formteilbedingt beim Zusammenfügen der beiden Formteile gleichzeitig ein Halteeffekt für den einzusetzenden Umlenkspiegel erzeugt werden.

Ferner kann die Abschlussplatte als Basis für einen zusätzlichen Aufsatz dienen, der im zusammengefügten Zustand die Abschlussplatte sandwichförmig beaufschlagt. Der Aufsatz ermöglicht weitere Funktionen, die bei mechanischen Zählwerken nicht möglich waren, nämlich Datenauslese und/oder Datenfernübertragung usw.

Hierzu umfasst der Aufsatz weitere Funktionseinheiten wie etwa eine Auswerteeinheit und/oder eine Anzeigeeinrichtung und/oder eine Datenschnittstelle und/oder eine Einrichtung zur Datenfernübertragung.

Zur vereinfachten Montage kann zwischen Aufsatz und Abschlussplatte eine kontaktierende mechanische Steckverbindung vorgesehen sein. Ferner können Mittel zur Verplombung der Steckverbindung zum Einsatz kommen.

Die vorliegende Erfindung betrifft des Weiteren einen Durchflussmesser gemäß Anspruch 14.

### Beschreibung einer Ausführungsform

Eine zweckmäßige Ausführungsform der vorliegenden Erfindung wird anhand von Zeichnungsfiguren näher erläutert.

Es zeigen:
- Fig. 1: eine Explosionsdarstellung einer zweckmäßigen Ausgestaltung des erfindungsgemäßen Durchflussmessers in perspektivischer Ansicht,
- Fig. 2: eine Schnittdarstellung entlang der Linie B-B des Durchflussmessers von Fig. 1 bei installiertem Messeinsatz.

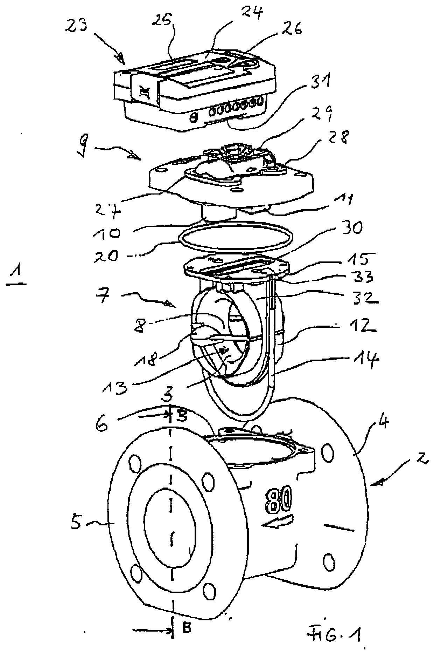

Bezugszeichen 1 in Fig. 1 bezeichnet den Durchflussmesser in seiner Gesamtheit. Hierbei handelt es sich um das Gehäuse 2 eines sogenannten "Woltman-Zählers", also um einen Großwasserzähler, wie er bei typischen Rohrdurchmessern in Nennweitenbereichen von DN 50 bis DN 500 seit vielen Jahren im Einsatz ist. Derartige Großwasserzähler erlauben Nenndurchflussmengen im Bereich von 15 m³/h bis 1.500 m³/h. Diese Großwasserzähler besitzen üblicherweise einen Aufbau, der ein Flügelrad umfasst, mittels dem über die Drehung des Flügelrads auf die Durchflussmenge geschlossen werden kann.

Das Gehäuse 2, welches typischerweise aus Metall besteht, ist in ein (nicht dargestelltes) Leitungsnetz installiert. Zum Anschluss des Gehäuses 2 umfasst dieses einen ersten Anschluss 4 für die Zuleitung sowie einen zweiten Anschluss 5 für die Ableitung von Medium, z.B. Wasser, in den Durchflussmesser 1 hinein bzw. aus letzterem heraus.

Im Bereich des Gehäuses 2 kann eine (nicht dargestellte) Gehäuseöffnung vorgesehen sein, die für die Bestimmung einer zusätzlichen Variablen wie z.B. der Temperatur durch den Einsatz eines Temperaturfühlers oder dergleichen genutzt werden kann. Diese Gehäuseöffnung kann auch dazu verwendet werden, einen weiteren (in der Figur nicht dargestellten) Durchflussmesser, zweckmäßigerweise einen Durchflussmesser auf Ultraschallmessprinzip, anzuschließen, mit dem eine Bypass-Leitung erfasst wird und beide Durchflussmesser hierdurch einen sogenannten "Verbundwasserzähler" bilden.

In dem Gehäuse 2 ist weiterhin eine großflächige Öffnung 6 in einer Ebene parallel zum Verlauf des Mediums vorhanden, welche dazu dient, bei herkömmlichen Großwasserzählem die für die mechanische Durchflussmessung erforderlichen Teile einzusetzen.

Erfindungsgemäß ist für den Großwasserzähler ein Messeinsatz 7 für eine Ultraschall-Messung vorgesehen. Der Messeinsatz 7 umfasst ein Einsatzteil 12 mit einem ringartigen Körper 3, der mit einer oberseitigen Befestigungsplatte 15 in Verbindung steht. Der ringartige Körper 3 geht zur Befestigungsplatte 15 hin in einen geradlinigen Bereich 32 über. Außenumfänglich sind Dichtmittel 14 in Form einer in eine Nut eingelegte Dichtung vorgesehen. Die Dichtmittel 14 dienen dazu, den Messeinsatz 7 zur Innenseite des Gehäuses 2 hin abzudichten, so dass die gesamte Strömung an Medium durch die Durchflussöffnung 13 des Messeinsatzes 7 hindurch verläuft.

An der Oberseite der Befestigungsplatte 15 befinden sich ein längliches Durchgangsloch 30 sowie weitere Befestigungsöffnungen 33. Die Form und/oder Größe der Befestigungsplatte 15 ist so gewählt, dass diese in die oberseitige Öffnung 6 des Gehäuses 2 vorzugsweise passgenau eingesetzt werden kann. Die Form des Durchgangslochs 30 kann frei gewählt werden, beispielsweise können anstelle davon auch einzelne, kreisrunde Öffnungen vorgesehen sein.

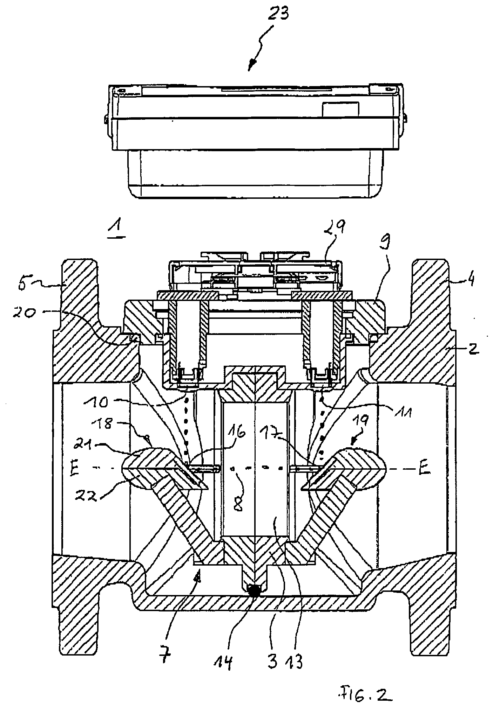

Der Messeinsatz 7 beinhaltet jeweils einen Umlenkspiegelhalter 18, 19, der einen Umlenkspiegel trägt (vgl. auch Fig. 2). In Fig. 1 ist lediglich der Umlenkspiegelhalter 18, der den Umlenkspiegel 16 trägt, sichtbar. Die Umlenkspiegel dienen dazu, eine Umlenkung des Ultraschallsignals, vorliegend eine U-förmige Umlenkung, zu gewährleisten.

Im Bereich der Messstrecke 8 wird durch den ringartigen Körper 3 ein Strömungsdurchgang 13 mit genau festgelegtem Strömungsquerschnitt definiert.

Zur Befestigung des Messeinsatzes 7 dient ein Gebäusedeckel 9. Der Gehäusedeckel 9 trägt zwei Halteeinsätze 27, 28 für Ultraschall-Wandler 10, 11, Die Halteeinsätze 27, 28 der zugehörigen Ultraschall-Wandler erstrecken sich vom Gehäusedeckel 9 betrachtet in Fig. 1 nach unten. Im montierten Zustand durchlaufen sie das längliche Durchgangsloch 30 in der Befestigungsplatte 15 des Messeinsatzes 7.

Zur Montage werden der Messeinsatz 7 und der Gehäusedeckel 9 zu einer handhabbaren Einheit vormontiert, in die Öffnung 6 eingesetzt und mittels dem Gehäusedeckel 9 am Gehäuse 2 befestigt. Zwischen dem Gehäusedeckel 9 und dem Gehäuse 2 befindet sich ein geeignetes Dichtmittel 20 z.B. im Dichtring. Die Montage des Gehäusedeckels 9 am Gehäuse 2 erfolgt über (nicht dargestellte) Schrauben, die durch entsprechende Öffnungen am Gehäusedeckel 9 hindurch in die zugehörigen Öffnungen am Gehäuse 2 eingreifen.

An der Oberseite des Gehäusedeckels 9 befindet sich eine Wandlerabdeckung 29, die auch als Halter für den Aufsatz 23, der der Auswertung, Datenerfassung, Datenübertragung und/oder gegebenenfalls Anzeige dient. Hierbei ist vorzugsweise eine mechanische Steckverbindung vorgesehen. Der Aufsatz 23 kann zweckmäßigerweise eine Anzeigeeinheit 26 und/oder eine Datenschnittstelle 25, beispielsweise eine optische Schnittstelle, wie z.B. Infrarotschnittstelle, umfassen. Ferner kann eine Auswerteeinheit 24, beispielsweise eine Rechen- und/oder Prozessoreinheit und/oder eine Einrichtung zur Datenfernübertragung (z.B. Funkmodul) in dem Aufsatz 23 vorgesehen sein. Zur Signalübertragung vom jeweiligen Wandler zum Aufsatz 23 ist eine (nicht dargestellte) Kabelverbindung vorgesehen.

Fig. 2 zeigt weiterhin ein Beispiel eines möglichen Aufbaus des Messeinsatzes 7 in einer Schnittebene entlang des Durchflusses senkrecht zur Ebene des Gehäusedeckels 9 (Schnittebene B-B in Fig. 1). Wie aus Fig. 2 ersichtlich, kann der jeweilige Umlenkspiegelhalter 18 bzw. 19 aus zwei Formteilen, nämlich einem ersten Formteil 21 sowie einem zweiten Formteil 22, aufgebaut sein, die entlang einer Verbindungsebene E miteinander in Kontakt stehen. Der ringartige Körper 3 kann zudem aus zwei in Längsrichtung zueinander angeordneten Teilen bestehen. Die Verbindungsebene E durchläuft beispielsweise die beiden Umlenkspiegelhalter 18,19 und schneidet die Ebene der Umlenkspiegel 16, 17.

Des Weiteren wird aus Fig. 2 deutlich, wie durch den ringartigen Körper 3 der Strömungsdurchgang 13, in dem sich die Umlenkspiegel 16, 17 befinden, festgelegt wird.

Wie aus Fig. 2 ebenfalls ersichtlich ist, sind die beiden Umlenkspiegelhalter 18, 19 stromlinienförmig ausgebildet, um möglichst wenig Verwirbelungen zu verursachen sowie einen Reinigungseffekt an der Spiegeloberfläche zu begründen.

Aus Fig. 2 ist der Verlauf der Messstrecke 8 ersichtlich. Das Ultraschallsignal verläuft ausgehend von dem Wandler 10 in Richtung erstem Umlenkspiegel 16, von dort um 90° umgelenkt zum zweiten Umlenkspiegel 17 sowie von dort wiederum um 90° umgelenkt nach oben zum zweiten Ultraschall-Wandler 11 und zurück. Der Messeinsatz 7 ist vorzugsweise als Kunststoffteil, z.B. Spritzgießteil, vorgesehen. Hierzu werden die betreffenden Formteile 21, 22 in dem entsprechenden Formgebungsverfahren hergestellt und anschließend unter Einsatz einer geeigneten Verbindungstechnologie, wie z.B. Ultraschall-Schweißen oder - Kleben miteinander verbunden.

Der Einsatz 7 ist, wie bereits eingangs beschrieben, mittels Dichtmittel 14 zum Gehäuse 2 abgedichtet. Darüber hinaus sind auch Dichtmittel 20 zwischen Montagplatte 9 und Gehäuse 2 vorgesehen.

Der Aufsatz 23 verfügt über eine unterseitige Ausnehmung 31, die zusammen mit der Wandlerabdeckung 29 an der Oberseite des Gehäusedeckels 9 eine Kontaktgeometrie für eine einfach durchzuführende, mechanische Steckverbindung sicherstellt.

Der Aufsatz 23 wird zur Montage an der Wandlerabdeckung 29 des Gehäusedeckels 9 seitlich aufgesetzt und anschließend horizontal verschoben und gegebenenfalls verrastet.

Die vorliegende Erfindung erlaubt es, bei herkömmlichen Gehäusen von Woltman-Zählern Messeinsätze 7 mit unterschiedlichen, je nach Bedarf ausgebildeten, Strömungsdurchgängen 13 einzusetzen. Die Nachrüstung derartiger Gehäuse mit Ultraschall-Messeinsätzen der beschriebenen Art gewährleistet zum einen einen wesentlich geringeren Investitionsbedarf im Vergleich zu einem kompletten Austausch der Geräte, zum anderen die Schaffung von Durchflusszählern mit erheblich günstigeren Service- und Reparaturzyklen. Hinzu kommt, dass die Messdynamik und -genauigkeit erhöht werden kann.

Vom Offenbarungsgehalt dieser Anmeldung umfasst sind auch Teilkombinationen der aus den Figuren ersichtlichen Merkmale, sofern hierdurch das erfindungsgemäße Prinzip beibehalten wird.

### BEZUGSZEICHENLISTE

- 1: Durchflussmesser
- 2: Gehäuse
- 3: Ringartiger Körper
- 4: Erster Anschluss
- 5: Zweiter Anschluss
- 6: Öffnung
- 7: Messeinsatz
- 8: Ultraschall-Messstrecke
- 9: Gehäusedeckel
- 10: Ultraschall-Wandler
- 11: Ultraschall-Wandler
- 12: Einsatzteil
- 13: Strömungsdurchgang
- 14: Dichtmittel
- 15: Befestigungsplatte
- 16: Umlenkspiegel
- 17: Umlenkspiegel
- 18: Umlenkspiegelhalter
- 19: Umlenkspiegelhalter
- 20: Dichtmittel
- 21: Erstes Formteil
- 22: Zweites Formteil
- 23: Aufsatz
- 24: Auswerteeinheit
- 25: Schnittstelle
- 26: Anzeigeeinheit
- 27: Halteeinsatz
- 28: Halteeinsatz
- 29: Wandlerabdeckung
- 30: Durchgangsloch
- 31: Ausnehmung
- 32: Geradliniger Bereich
- 33: Befestigungsöffnung

## Patentansprüche

1. Messeinsatz für einen Durchflussmesser für flüssiges Medium, wobei der Durchflussmesser ein Gehäuse aufweist,
das Gehäuse (2) einen ersten Anschluss (4) für die Zuleitung und einen zweiten Anschluss (5) für die Ableitung von Medium aufweist, die mit einem Leitungsnetz verbindbar sind,
das Gehäuse (2) eine senkrecht zu den Anschlüssen orientierte Öffnung (6) aufweist, die zum Einsatz eines Messeinsatzes mit einem mechanischen Flügelrad in das Gehäuse (2) vorgesehen ist,
**dadurch gekennzeichnet, dass**
es sich bei dem Durchflussmesser um einen Woltman-Zähler handelt,
der Messeinsatz (7) als Nachrüst-Messeinsatz vorgesehen ist und
eine U-förmige Ultraschallmessstrecke (8) beinhaltet.

2. Messeinsatz nach Anspruch 1,
**dadurch gekennzeichnet, dass**
der Messeinsatz (7) einen Gehäusedeckel (9) aufweist, der an der Öffnung (6) befestigbar ist.

3. Messeinsatz nach Anspruch 2,
**dadurch gekennzeichnet, dass**
der Gehäusedeckel (9) als Montageplatte bzw. Montageplattform für weitere Bauteile, insbesondere für Ultraschallwandler (10, 11) dient.

4. Messeinsatz nach Anspruch 2 oder 3,
**dadurch gekennzeichnet, dass**
der Messeinsatz (7) vorzugsweise ein Einsatzteil (12) umfasst, welches einen Strömungsdurchgang (13) für das Medium festlegt und die Messstrecke (8) oder zumindest einen Teil derselben beherbergt.

5. Messeinsatz nach Anspruch 2 bis 4,
**dadurch gekennzeichnet, dass**
der Messeinsatz (7) eine Befestigungsplatte (15) aufweist, die mit dem Gehäusedeckel (9) zu einer handhabbaren Einheit verbindbar ist.

6. Messeinsatz nach Anspruch 4 oder 5,
**dadurch gekennzeichnet, dass**
Dichtmittel (14) für eine Abdichtung des Einsatzteils (12) zum Gehäuse (2) hin vorgesehen sind.

7. Messeinsatz nach einem der Ansprüche 4 - 6,
**dadurch gekennzeichnet, dass**
Umlenkspiegel (16, 17) zur Umlenkung des Ultraschallsignals sowie zugehörige Umlenkspiegelhalter (18, 19) vorgesehen sind.

8. Messeinsatz nach einem der Ansprüche 4 - 7,
**dadurch gekennzeichnet, dass**
die Umlenkspiegelhalter (18, 19) Bestandteil, vorzugsweise einteiliger Bestandteil, des Einsatzteils (12) sind.

9. Messeinsatz nach einem der Ansprüche 4 - 8,
**dadurch gekennzeichnet, dass**
das Einsatzteil (12) aus zwei miteinander in Verbindung stehenden Formteilen (21, 22) aufgebaut ist und die gemeinsame Verbindungsebene (E) die Ebene der Oberfläche der Umlenkspiegel (16, 17) schneidet.

10. Messeinsatz nach einem der Ansprüche 4 - 9,
**dadurch gekennzeichnet, dass**
das Einsatzteil (12) aus Kunststoff besteht.

11. Messeinsatz nach einem der vorhergehenden Ansprüche,
**dadurch gekennzeichnet, dass**
der Gehäusedeckel (9) als Basis für einen Aufsatz (23) dient.

12. Messeinsatz nach Anspruch 11,
**dadurch gekennzeichnet, dass**
der Aufsatz (23) eine Auswertungseinheit (24) und/oder eine Anzeigeeinrichtung (26) umfasst.

13. Messeinsatz nach Anspruch 12,
**dadurch gekennzeichnet, dass**
zwischen Aufsatz (23) und Abschlussplatte (9) eine mechanische Steckverbindung vorgesehen ist.

14. Durchflussmesser, wobei der Durchflussmesser ein Gehäuse eines Woltman-Zählers aufweist, mit
einer Anschlussarmatur (2), die gleichzeitig das Gehäuse des Durchflusszählers ist,
einer in der Anschlussarmatur befindlichen Öffnung (6),
einem Messeinsatz zum Einsatz in die Öffnung (6),
**gekennzeichnet durch**
einen Messeinsatz gemäß mindestens einem der Ansprüche 1 - 13.

## Claims

1. Measuring insert for a flow meter for liquid medium, wherein the flow meter has a housing,
the housing (2) has a first port (4) for the supply of and a second port (5) for the discharge of medium, which ports are connectable to a line network,
the housing (2) has an opening (6) which is oriented perpendicularly to the ports and which is provided for inserting a measuring insert with a mechanical impeller into the housing (2),
**characterized in that**
the flow meter is a Woltman meter,
the measuring insert (7) is provided as a retrofit measuring insert and
contains a U-shaped ultrasonic measuring section (8).

2. Measuring insert according to claim 1,
**characterized in that**
the measuring insert (7) has a housing cover (9) which is fastenable at the opening (6).

3. Measuring insert according to Claim 2,
**characterized in that**
the housing cover (9) serves as a mounting plate or a mounting platform for further components, in particular for ultrasonic transducers (10, 11).

4. Measuring insert according to Claim 2 or 3,
**characterized in that**
the measuring insert (7) preferably comprises an insert part (12) which establishes a flow passage (13) for the medium and which accommodates the measuring section (8) or at least a portion thereof.

5. Measuring insert according to Claims 2 to 4,
**characterized in that**
the measuring insert (7) has a fastening plate (15) which is connectable to the housing cover (9) to form a handleable unit.

6. Measuring insert according to Claim 4 or 5,
**characterized in that**
sealing means (14) for sealing off the insert part (12) with respect to the housing (2) are provided.

7. Measuring insert according to one of Claims 4-6,
**characterized in that**
deflecting mirrors (16, 17) for deflecting the ultrasonic signal, and associated deflecting mirror holders (18, 19) are provided.

8. Measuring insert according to one of Claims 4-7,
**characterized in that**
the deflecting mirror holders (18, 19) are constituents, preferably integral constituents, of the insert part (12).

9. Measuring insert according to one of Claims 4-8,
**characterized in that**
the insert part (12) is constructed as two moulded parts (21, 22) which are connected to one another, and the common connection plane (E) intersects the plane of the surface of the deflecting mirrors (16, 17).

10. Measuring insert according to one of Claims 4-9,
**characterized in that**
the insert part (12) is composed of plastic.

11. Measuring insert according to one of the preceding claims,
**characterized in that**
the housing cover (9) serves as a base for an attachment (23).

12. Measuring insert according to Claim 11,
**characterized in that**
the attachment (23) comprises an evaluation unit (24) and/or a display device (26).

13. Measuring insert according to Claim 12,
**characterized in that**
a mechanical plug connection is provided between the attachment (23) and the end plate (9).

14. Flow meter, wherein the flow meter has a housing of a Woltman meter, having a port fitting (2) which is at the same time the housing of the flow meter,
having an opening (6) situated in the port fitting,
having a measuring insert for insertion into the opening (6),
**characterized by**
a measuring insert according to at least one of Claims 1-13.

## Revendications

1. Organe de mesure pour un compteur de débit pour un fluide liquide, dans lequel le compteur de débit présente un boîtier,
le boîtier (2) présente un premier raccord (4) pour l'arrivée et un deuxième raccord (5) pour l'évacuation de fluide, qui peuvent être raccordés à un réseau de conduites,
le boîtier (2) présente une ouverture (6) orientée perpendiculairement aux raccords, qui est prévue pour l'introduction d'un organe de mesure avec une roue à aubes mécanique dans le boîtier (2),
**caractérisé en ce que** le compteur de débit est un compteur Woltman, l'organe de mesure (7) est prévu comme organe de mesure additionnel et comporte une section de mesure par ultrasons en forme de U (8).

2. Organe de mesure selon la revendication 1, **caractérisé en ce que** l'organe de mesure (7) présente un couvercle de boîtier (9), qui peut être fixé sur l'ouverture (6).

3. Organe de mesure selon la revendication 2, **caractérisé en ce que** le couvercle de boîtier (9) fait office de plaque de montage ou de plate-forme de montage pour d'autres composants, en particulier pour des transducteurs d'ultrasons (10, 11).

4. Organe de mesure selon la revendication 2 ou 3, **caractérisé en ce que** l'organe de mesure (7) comprend de préférence une pièce d'insertion (12), qui définit un passage d'écoulement (13) pour le fluide et qui héberge la section de mesure (8) ou au moins une partie de celle-ci.

5. Organe de mesure selon une revendication 2 à 4, **caractérisé en ce que** l'organe de mesure (7) présente une plaque de fixation (15), qui peut être assemblée au couvercle de boîtier (9) pour former une unité manipulable.

6. Organe de mesure selon la revendication 4 ou 5, **caractérisé en ce qu'**il est prévu des moyens d'étanchéité (14) pour l'étanchéité de la partie d'insertion (12) par rapport au boîtier (2).

7. Organe de mesure selon l'une quelconque des revendications 4 à 6, **caractérisé en ce qu'**il est prévu des miroirs de déviation (16, 17) pour la déviation du signal ultrasonore ainsi que des supports de miroirs de déviation correspondants (18, 19).

8. Organe de mesure selon l'une quelconque des revendications 4 à 7, **caractérisé en ce que** les supports de miroirs de déviation (18, 19) sont des composants, de préférence des composants en une seule pièce, de la partie d'insertion (12).

9. Organe de mesure selon l'une quelconque des revendications 4 à 8, **caractérisé en ce que** la partie d'insertion (12) est construite à partir de deux pièces moulées assemblées l'une à l'autre et le plan d'assemblage commun (E) coupe le plan de la surface des miroirs de déviation (16, 17).

10. Organe de mesure selon l'une quelconque des revendications 4 à 9, **caractérisé en ce que** la partie d'insertion (12) est constituée de matière plastique.

11. Organe de mesure selon l'une quelconque des revendications précédentes, **caractérisé en ce que** le couvercle de boîtier (9) sert de base pour un élément ajouté (23).

12. Organe de mesure selon la revendication 11, **caractérisé en ce que** l'élément ajouté (23) comprend une unité d'évaluation (24) et/ou un dispositif d'affichage (26).

13. Organe de mesure selon la revendication 12, **caractérisé en ce qu'**il est prévu un assemblage mécanique enfichable entre l'élément ajouté (23) et la plaque de fermeture (9).

14. Compteur de débit, dans lequel le compteur de débit présente un boîtier d'un compteur Woltman, avec une armature de raccordement (2), qui est en même temps le boîtier du compteur de débit, avec une ouverture (6) se trouvant dans l'armature de raccordement, avec un organe de mesure à introduire dans l'ouverture (6), **caractérisé par** un organe de mesure selon au moins une des revendications 1 à 13.
